# EUROPÄISCHE PATENTSCHRIFT

(11) **EP 1 714 810 B1**
(45) Veröffentlichungstag und Bekanntmachung des Hinweises auf die Patenterteilung: **28.07.2010**
(21) Anmeldenummer: 05290907.4
(22) Anmeldetag: 21.04.2005
(51) Int. Cl.: B60H 1/22, F24H 9/18, H05B 3/14

(54) **Elektrischer Zuheizer für eine Heizungs- oder Klimaanlage eines Kraftfahrzeugs**
Electric additional heater for an air conditioning system of a vehicle
Chauffage supplémentaire électrique pour un système de climatisation d'un véhicule

(43) Veröffentlichungstag der Anmeldung: 25.10.2006
(73) Patentinhaber: Behr GmbH & Co. KG, 70469 Stuttgart (DE); Behr France Rouffach SAS, 68250 Rouffach (FR)
(72) Erfinder: Brun, Michel, 68740 Rustenhart (FR); Denny, Geoffrey, 68100 Mulhouse (FR); Eckerlen, Gerard, 68250 Rouffach (FR); Gogmos, Erwan, 68000 Colmar (FR); Kohl, Michael, 74321 Bietigheim (DE); Kreuzer, Walter, 71229 Leonberg (DE); Miss, Pascal, 67600 Sélestat (FR); Mougey, Mathieu, 68190 Ensisheim (FR); Otto, Jürgen, 75428 Illingen (DE); Schmittheisler, Christophe, 67680 Epfig (FR)
(74) Vertreter: Grauel, Andreas

(56) Entgegenhaltungen:
- EP-A- 1 505 118
- DE-A1- 10 012 675
- DE-A1- 19 804 496
- DE-A1-102004 027 687
- US-A- 4 264 888

## Beschreibung

Die Erfindung betrifft einen elektrischen Zuheizer, insbesondere für eine Heizungs- oder Klimaanlage eines Kraftfahrzeugs, gemäß dem Oberbegriff des Anspruches 1.

Bei Niederverbrauchsfahrzeugen ist auf Grund des geringen Abwärmeangebots eine zusätzliche Heizleistung zur Erwärmung des Fahrgastraums sowie zur schnellen Beseitigung eines Beschlags (Eis oder Wasser) insbesondere an der Windschutzscheibe erforderlich. Hierfür ist bekannt, bei Wärmetauschern, die aus Flachrohren aufgebaut sind, durch welche ein Wärmeübertragungsmedium strömt, welches im Heizungsfall Wärme abgibt, zumindest an den äußersten Rohren eine Zusatzheizung in Form von PTC-Heizelementen vorzusehen, wobei es sich in der Regel um Keramik-PTC-Bausteine handelt, bei denen sich üblicherweise eine Oberflächentemperatur von zwischen 110 und 160°C einstellt, unabhängig von den Randbedingungen, wie angelegte Spannung, Nominalwiderstand, Luftströmung. Auf Grund von Beschränkungen in der Formgebung und Geometrie ist die Anbringung oder die Konstruktion eines elektrischer Zuheizers recht aufwendig. Zudem sind die Keramik-PTC-Bausteine relativ schwer.

Aus der WO 03/098124 A1 ist ein Wärmetauscher mit elektrischem Zuheizer mit mehreren parallel zueinander angeordneten von einem Wärmeübertragungsmedium durchströmten Flachrohren bekannt, wobei zumindest einem Teil der Flachrohre ein nach dem Verlöten des Wärmetauschers angebrachtes, elektrisch betriebenes Heizelement als Zusatzheizung zugeordnet ist, das mittels eines Halteelements am Wärmetauscher stirnseitig bezüglich des entsprechenden Flachrohrs und parallel hierzu verlaufend mittels des ebenfalls parallel zum Flachrohr verlaufenden Halteelements angebracht ist. Dabei kann ein aus einer Folie bestehendes Polymer-PTC-Material verwendet werden, das U-förmig um eine Mittelelektrode gelegt ist, und unter leichter Pressspannung den Raum innerhalb des Haltegitters gerade so ausfüllt. Hierbei befindet sich das Haltegitter auf einem Zwischenpotential und muss vom Heizkörper elektrisch isoliert werden. Eine derartige Ausgestaltung lässt jedoch noch Wünsche offen.

Ferner ist aus der DE 10 2004 027 687 A1 eine elektrische Heizvorrichtung mit mehreren Heizkörperplatten, die parallel zueinander angeordnet sind, um einen Luftkanal zwischen zwei benachbarten Heizkörperplatten zu definieren, ein mit einer Stirnseite jeder Heizkörperplatte verbundenes positives Elektrodenelement und ein mit der anderen Stirnseite jeder Heizkörperplatte verbundenes negatives Elektrodenelement bekannt. Bei den Heizkörperplatten handelt es sich beispielsweise um ein elektrisch leitfähiges Harz, in welches ein elektrisch leitfähiges Füllmaterial gemischt ist. Dabei besitzt das elektrisch leitfähige Harz im Allgemeinen eine positive Widerstands-Temperatur-Kennlinie, bei welcher der elektrische Widerstand bei einer vorbestimmten Temperatur oder höher steigt. Der Strom fließt hierbei von einem Elektrodenelement durch die Heizkörperplatten zum anderen Elektrodenelement.

Die DE 198 04 496 A1 zeigt einen PTC-Wabenkörper mit innen liegenden Luftkanälen.

Ausgehend von diesem Stand der Technik ist es Aufgabe der Erfindung, einen verbesserten elektrischen Zuheizer zur Verfügung zu stellen. Diese Aufgabe wird gelöst durch einen elektrischen Zuheizer, insbesondere für eine Heizungs- oder Klimaanlage eines Kraftfahrzeugs, mit den Merkmalen des Anspruchs 1. Vorteilhafte Ausgestaltungen sind Gegenstand der Unteransprüche.

Erfindungsgemäß ist ein elektrischer Zuheizer, insbesondere für eine Heizungs- oder Klimaanlage eines Kraftfahrzeugs, vorgesehen, wobei eine Mehrzahl von Heizelementen vorgesehen ist, die durch PTC-Elemente gebildet sind, und die Heizelemente mit mindestens einer elektrisch leitenden Oberflächenbeschichtung, im Folgenden als Beschichtung bezeichnet, versehen sind. Das Vorsehen einer elektrisch leitenden Beschichtung vereinfacht die Stromzuführung und/oder -ableitung, so dass eine großflächige Kontaktierung entfallen kann, wodurch sich die Herstellungskosten und auch das Gewicht des Zuheizers verringern. Bevorzugt sind die PTC-Elemente mit zwei räumlich durch das PTC-Element voneinander getrennten elektrisch leitenden Beschichtungen versehen. Hierbei sind die Beschichtungen so angeordnet, dass das PTC-Element möglichst großflächig durchströmt und dadurch entsprechend erwärmt wird. Um eine ungleichmäßige Erwärmung zu verhindern, ist die Dicke und somit der Abstand der beiden Beschichtungen des PTC-Elements entsprechend möglichst gleichbleibend ausgebildet.

Die PTC-Elemente werden bevorzugt durch Kunststoff-Elemente mit PTC-Eigenschaften gebildet, welche einfacher und flexibler herstellbar sind als bekannte Keramik-PTC-Elemente.

Erfindungsgemäß weisen die PTC-Elemente ein Hohlprofil auf, wobei das Hohlprofil auch aus mehreren zusammengesetzten Teilen gebildet sein kann. Als Hohlprofil kommen insbesondere hohlzylindrische oder flachrohrartige Profile in Frage, jedoch sind die Formen nicht beschränkt.

Das Heizelement kann in Längsrichtung unterteilt mehrteilig, insbesondere zweiteilig, ausgebildet sein. Hierbei können die Teile beispielsweise als Halbschalen ausgebildet sein, wobei jedoch sicherzustellen ist, dass eine elektrisch leitende Beschichtung der Außenseite nicht mit der elektrisch leitenden Beschichtung der Innenseite in Kontakt ist, um einen Kurzschluss zu vermeiden. Ebenfalls kann das Heizelement durch zwei Platten gebildet sein, wobei die Platten auch eine insbesondere der Beabstandung dienende Strukturierung aufweisen können.

Die elektrisch leitende Beschichtung ist bevorzugt durch eine metallische Beschichtung, insbesondere durch eine Silber-, Aluminium-, Kupfer- oder Goldschicht, gebildet, welche mittels eines beliebigen Verfahrens aufgebracht sein kann, beispielsweise mittels Tauchens, PVD-(Physical Vapor Deposition) oder CVD-(Chemical Vapor Deposition) Verfahrens. Alternativ können auch Metallfolien als elektrisch leitende Beschichtungen vorgesehen sein, insbesondere geeignet sind Metallfolien aus Aluminium, einer Aluminium-Legierung, Kupfer oder einer Kupfer-Legierung.

Aus Gründen der Kurzschluss-Sicherheit im Kraftfahrzeug ist bevorzugt die äußere elektrisch leitende Beschichtung mit dem Minus-Pol und/oder die innere elektrisch leitende Beschichtung mit dem Plus-Pol verbunden ist.

Das Heizelement besteht bevorzugt aus Kunststoff mit PTC-Eigenschaften, insbesondere aus einem Polymer, insbesondere bevorzugt einem Polyolefin, mit elektrisch leitenden Füllmaterialien, insbesondere mit Kohlenstoff, insbesondere in Form von Rußpartikeln. Das Vorsehen eines Kunststoff-PTC-Heizelements vergrößert die mögliche Formenvielfalt und ermöglicht eine Optimierung der Strömungswege für das zu erwärmende Medium durch den Zuheizer. Neben Luft können auch andere Medien, insbesondere elektrisch nicht oder nur minimal leitfähige Gase oder Fluide, in einem entsprechenden Zuheizer erwärmt werden, beispielsweise ein Öl.

Die vom zu erwärmenden Medium umströmte Fläche ist bevorzugt mit einer oberflächenvergrößernden Strukturierung versehen, welche direkt mitgespritzt sein kann.

Die oberflächenvergrößernde Strukturierung kann alternativ auch durch gut wärmeleitende Platten oder Wellrippen gebildet sein, welche auf oder zwischen die Heizelemente geschoben sind. Hierbei handelt es sich bevorzugt um Metallbleche, insbesondere aus Aluminium, Kupfer oder Silber, welche gut wärmeleitend sind.

Im Folgenden wird die Erfindung anhand mehrerer Ausführungsbeispiele unter Bezugnahme auf die Zeichnung im Einzelnen erläutert. Es zeigen:
- Fig. 1a-1e: einen ausschnittsweise schematisch dargestellten elektrischen Zuheizer gemäß dem ersten Ausführungsbeispiel in verschiedenen Ansichten,
- Fig. 2a-2d: eine ausschnittsweise schematisch dargestellte Variante des ersten Ausführungsbeispiels in verschiedenen Ansichten,
- Fig. 3a-d: einen ausschnittsweise schematisch dargestellten elektrischen Zuheizer gemäß dem zweiten Ausführungsbeispiel in verschiedenen Ansichten,
- Fig. 4a-d: eine ausschnittsweise schematisch dargestellte Variante des zweiten Ausführungsbeispiels in verschiedenen Ansichten,
- Fig. 5a-d: einen ausschnittsweise schematisch dargestellten elektrischen Zuheizer gemäß dem dritten Ausführungsbeispiel in verschiedenen Ansichten,

- Fig. 6a-d: eine ausschnittsweise schematisch dargestellte Variante des dritten Ausführungsbeispiels in verschiedenen Ansichten,
- Fig. 7a-d: einen ausschnittsweise schematisch dargestellten elektrischen Zuheizer gemäß dem vierten Ausführungsbeispiel in verschiedenen Ansichten,
- Fig. 8a-d: eine ausschnittsweise schematisch dargestellte erste Variante des vierten Ausführungsbeispiels in verschiedenen Ansichten,
- Fig.9a-d: eine ausschnittsweise schematisch dargestellte zweite Variante des vierten Ausführungsbeispiels in verschiedenen Ansichten,
- Fig. 10a-d: einen ausschnittsweise schematisch dargestellten elektrischen Zuheizer gemäß dem fünften Ausführungsbeispiel in verschiedenen Ansichten,
- Fig. 11a-d: eine ausschnittsweise schematisch dargestellte erste Variante des fünften Ausführungsbeispiels in verschiedenen Ansichten,
- Fig. 12a-d: eine ausschnittsweise schematisch dargestellte zweite Variante des fünften Ausführungsbeispiels in verschiedenen Ansichten,
- Fig. 13a-d: eine ausschnittsweise schematisch dargestellte dritte Variante des fünften Ausführungsbeispiels in verschiedenen Ansichten,
- Fig. 14a-d: einen ausschnittsweise schematisch dargestellten elektrischen Zuheizer gemäß dem sechsten Ausführungsbeispiel in verschiedenen Ansichten, wobei rechts das letzte Teil eines Heizelements nochmals einzeln dargestellt ist,
- Fig. 15a-d: eine ausschnittsweise schematisch dargestellte erste Variante des sechsten Ausführungsbeispiels in verschiedenen Ansichten, wobei rechts das letzte Teil eines Heizelements nochmals einzeln dargestellt ist,
- Fig. 16a-d: eine ausschnittsweise schematisch dargestellte zweite Variante des sechsten Ausführungsbeispiels in verschiedenen Ansichten, wobei rechts das letzte Teil eines Heizelements nochmals einzeln dargestellt ist,
- Fig. 17a-d: eine ausschnittsweise schematisch dargestellte dritte Variante des sechsten Ausführungsbeispiels in verschiedenen Ansichten, wobei links das letzte Teil eines Heizelements nochmals einzeln dargestellt ist,
- Fig. 18a-d: eine ausschnittsweise geschnittene und schematisch dargestellte des sechsten Ausführungsbeispiels aus den Figuren 14a bis 14d in verschiedenen Ansichten, wobei rechts das letzte Teil eines Heizelements nochmals einzeln dargestellt ist,
- Fig. 19a-d: eine ausschnittsweise schematisch dargestellte vierte Variante des sechsten Ausführungsbeispiels in verschiedenen Ansichten, wobei rechts das letzte Teil eines Heizelements nochmals einzeln dargestellt ist,
- Fig. 20a-d: einen ausschnittsweise schematisch dargestellten elektrischen Zuheizer gemäß einem nicht erfindungsgemäßen siebten Beispiel in verschiedenen Ansichten, wobei rechts das letzte Teil eines Heizelements nochmals einzeln dargestellt ist,
- Fig. 21 a-d: eine ausschnittsweise schematisch dargestellte erste Variante des siebten Beispiels in verschiedenen Ansichten,
- Fig. 22a-c: Detaildarstellungen einer nicht erfindungsgemäßen Abwandlung der vierten Variante des sechsten Ausführungsbeispiels (Fig. 19a-d),
- Fig. 23a-e: einen ausschnittsweise schematisch dargestellten elektrischen Zuheizer gemäß einem achten Beispiels in verschiedenen Ansichten,
- Fig. 24a: einen ausschnittsweise schematisch dargestellten elektrischen Zuheizer gemäß einem neunten Beispiel, wobei nur ein Heizelement dargestellt ist, und
- Fig. 24b: eine schematische Darstellung des Zuheizers von Fig. 24a, wobei mehrere Heizelemente dargestellt sind.

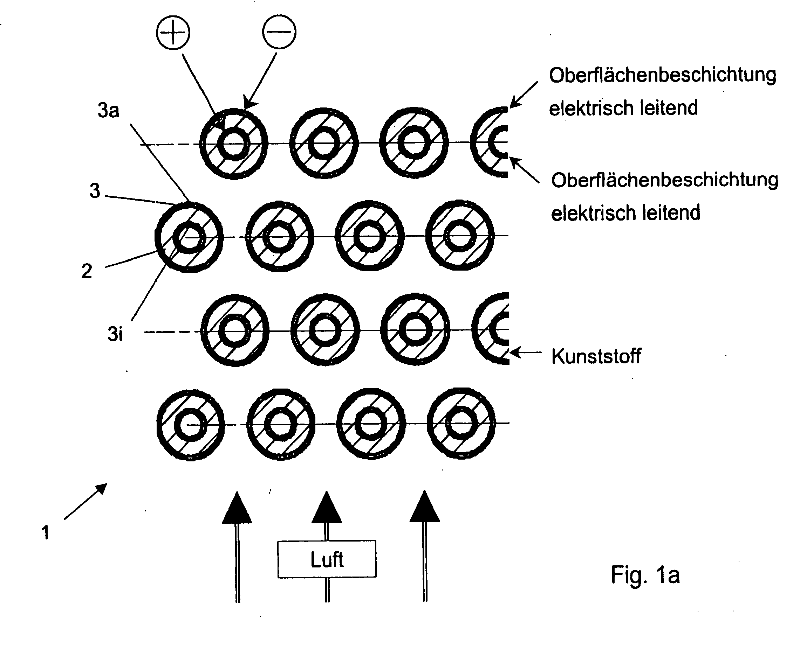

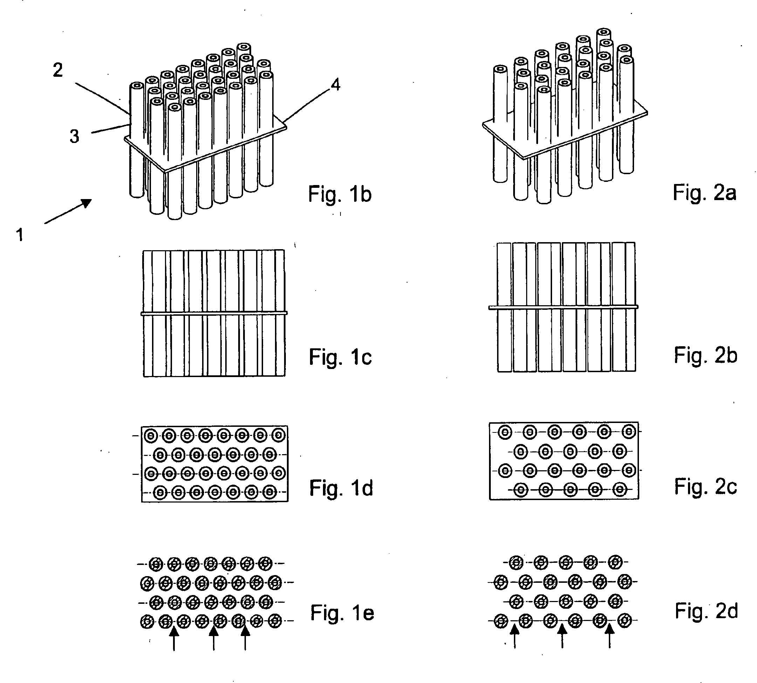

Ein elektrischer Zuheizer 1 für eine Kraftfahrzeug-Klimaanlage (nicht dargestellt) besteht gemäß dem ersten, in den Figuren 1a bis 1e dargestellten Ausführungsbeispiel aus einer paketartig angeordneten Mehrzahl von rundrohrförmig ausgebildeten Heizelementen 2 aus einem Kunststoff mit PTC-Eigenschaften, vorliegend aus einem Polyolefin mit Rußpartikeln. Die Heizelemente 2 sind im die Kraftfahrzeug-Klimaanlage durchströmenden Luftstrom, angedeutet durch Pfeile, vorliegend nach dem Heizer angeordnet.

Die einzelnen mittels Spritzen hergestellten Heizelemente 2 sind innen und außen elektrisch leitend beschichtet (Beschichtungen 3), wobei aus Gründen der Kurzschluss-Sicherheit im Kraftfahrzeug vorliegend die innere Beschichtung 3i mit dem Plus-Pol und die äußere Beschichtung 3a mit dem Minus-Pol der Spannungsquelle verbunden ist. Die elektrisch leitende (Oberflächen-) Beschichtung wurde mittels eines PVD-Verfahrens aufgebracht, wobei sie gemäß dem ersten Ausführungsbeispiel durch eine dünne Silberschicht gebildet ist. Dabei sind die innere Beschichtung 3i und die äußere Beschichtung 3a derart voneinander beabstandet, dass ein elektrischer Kurzschluss ausgeschlossen ist.

Gemäß dem ersten Ausführungsbeispiel ist mittig eine Platte 4 vorgesehen, die als Anspritzplatte für die Herstellung der einzelnen Heizelemente 2 dient, wobei sie nicht notwendigerweise mittig angeordnet sein muss.

Liegt eine Spannung, beispielsweise eine von einem 42V-Bordnetz kommende Spannung von bis zu 42V an, so erfolgt über die elektrisch leitenden Beschichtungen eine relativ verlustfreie Stromzuführung und -verteilung über die einzelnen Heizelemente 2 und anschließend wird das PTC-Material quer durchströmt, wobei auf Grund des elektrischen Widerstands Wärme erzeugt wird. Hierbei ist der elektrische Widerstand auf Grund der PTC-Eigenschaften abhängig von der Wärme, so dass die Heizelemente 2 selbstregelnde Eigenschaften aufweisen. Anschließend erfolgt über die andere Beschichtung 3 eine relativ verlustfreie Stromableitung, so dass im Wesentlichen ausschließlich in den gewünschten Bereichen Wärme erzeugt wird.

Bei der in Fig. 2a bis 2d dargestellten Variante des ersten Ausführungsbeispiels sind die einzelnen Heizelemente 2 weiter voneinander beabstandet, so dass der maximale luftseitige Druckabfall verringert wird, jedoch bei verringerter wärmeübertragender Oberfläche. Ansonsten entspricht die Variante dem ersten Ausführungsbeispiel.

Gemäß dem zweiten Ausführungsbeispiel sind anstelle von Rundrohren Flachrohre als Heizelemente 2 vorgesehen, wobei sie für einen möglichst geringen Luftwiderstand entsprechend angeordnet sind. Auch in diesem Fall sind die Rohre innen und außen mit einer elektrischen Beschichtung 3 versehen, in diesem Fall mittels einer Kupferschicht, die mittels Tauchen aufgebracht wurde. Die elektrische Verschaltung entspricht derjenigen des ersten Ausführungsbeispiels.

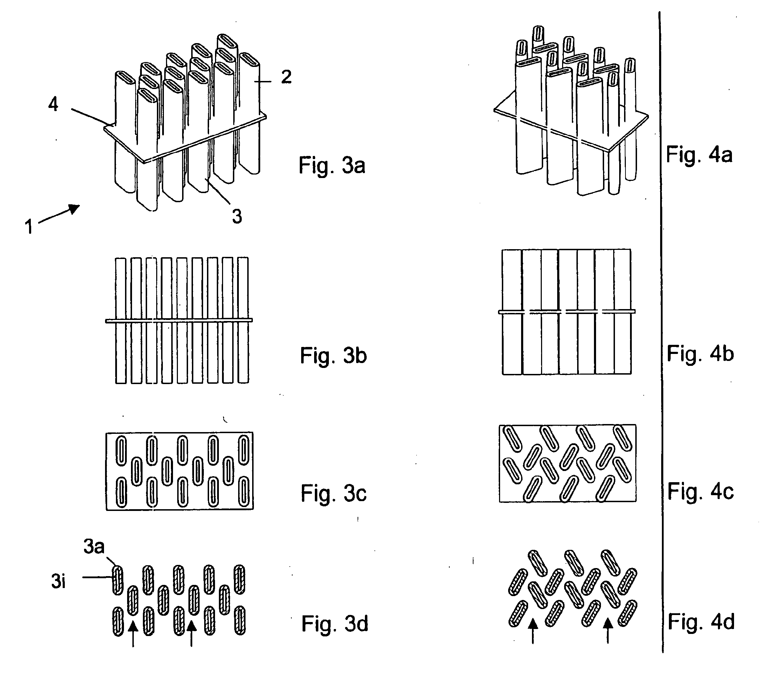

Die Flachrohre können auch unterschiedlich ausgerichtet sein, wie beispielsweise gemäß der in den Figuren 4a bis 4d dargestellten Variante des zweiten Ausführungsbeispiel fischgrätenartig, so dass beispielsweise gezielte Verwirbelungen der durchströmenden Luft erzeugt werden.

Neben den in der Zeichnung dargestellten Ausgestaltungen der Rohre sind auch beliebig andere Geometrien möglich, beispielsweise tropfenförmige oder dreieckförmige Geometrien. Auch eine Kombination unterschiedlicher Geometrien und/oder verschiedener Abstände der Heizelemente und/oder verschiedener Ausrichtungen der Heizelemente in einem elektrischen Zuheizer ist möglich, beispielsweise auch in Abhängigkeit von einzelnen Klimazonen bei mehrzonigen Kraftfahrzeug-Klimaanlagen.

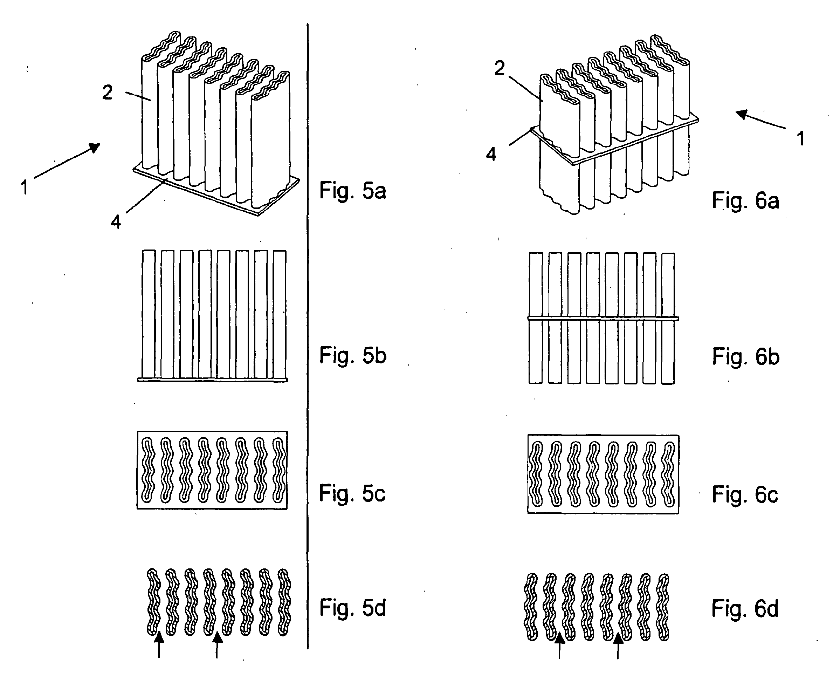

Gemäß dem in den Figuren 5a bis 5d dargestellten dritten Ausführungsbeispiel weist die Gestalt der flachrohrartig ausgebildeten Heizelemente 2 eine Strukturierung 5 auf, um eine verbesserte Wärmeübertragung an die durchströmende Luft zu ermöglichen. Gemäß dem dritten Ausführungsbeispiel ist wiederum eine Platte 4 zum Anspritzen der Heizelemente 2 vorgesehen, diesmal jedoch im Gegensatz zum ersten Ausführungsbeispiel an einem Ende der Heizelemente 2. An der Innen- und Außenfläche der Heizelemente 2 ist gemäß dem dritten Ausführungsbeispiel eine Aluminium-Schicht vorgesehen, die mittels eines CVD-Verfahrens aufgebracht wurde.

Bei der in den Figuren 6a bis 6d dargestellten Variante des dritten Ausführungsbeispiels ist die Platte 4 entsprechend dem ersten Ausführungsbeispiel mittig angeordnet.

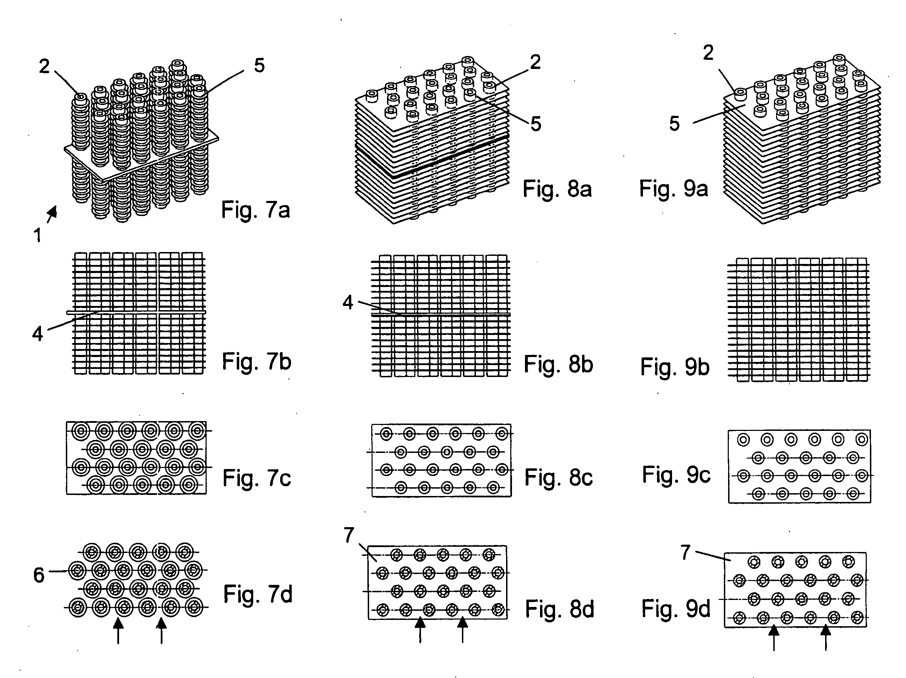

In den Figuren 7a bis 7d ist das vierte Ausführungsbeispiel dargestellt, wobei die wärmeübertragende Oberfläche der einzelnen, vorliegend als Rundrohre ausgebildeten Heizelemente 2 durch im Rahmen der Herstellung der Heizelemente 2 mitgespritzte, flache Scheiben 6 mit kreisförmiger Gestalt, vergrößert ist. Die elektrisch leitende äußere Beschichtung 3a ist hierbei durchgehend auch auf den Flächen und am Außenumfang der Scheiben 6 vorgesehen.

Gemäß der in den Figuren 8a bis 8d dargestellten ersten Variante des vierten Ausführungsbeispiels sind an Stelle der mitgespritzten Scheiben 6 nachträglich über die als Heizelemente 2 dienenden Rundrohre geschobene Platten 7 vorgesehen, weiche zur Aufnahme der Rohre mit einer Mehrzahl von kreisförmigen Öffnungen ausgebildet sind. Hierbei bestehen die Platten 7 gemäß der ersten Variante aus dem gleichen Material wie die Heizelemente 2. Die einzelnen Rohre sind, wie beim ersten Ausführungsbeispiel an einer Anspritz-Platte 5 beidseitig angespritzt, wobei die Herstellung vorliegend im Verbund erfolgt.

Die als Heizelemente 2 dienenden Rundrohre gemäß der in den Figuren 9a bis 9d dargestellten zweiten Variante sind einzeln hergestellt und in kreisförmige Öffnungen eingeführt, die in als Rippen dienende Aluminium-Platten 7 gebohrt oder gestanzt sind. Hierbei sind die Rippen voneinander beabstandet angeordnet. Auf eine Anspritz-Platte 4 kann verzichtet werden.

Gemäß einer nicht in der Zeichnung dargestellten, weiteren Variante können in die Aluminium-Platten zusätzlich Kiemen eingebracht sein, um die Wärmeübertragung weiter zu verbessern.

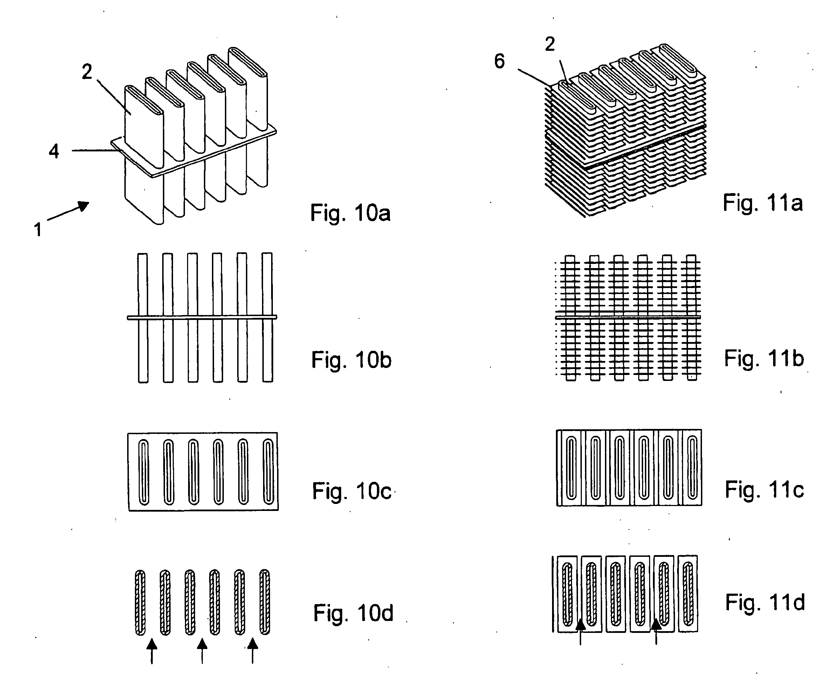

Die Figuren 10a bis 10d zeigen verschiedene Ansichten des fünften Ausführungsbeispiel, gemäß dem eine einzige senkrecht zur Strömungsrichtung verlaufende Reihe von flachrohrartig ausgebildeten PTC-Heizelementen 2 vorgesehen sind, deren Längsseiten jeweils zum benachbarten Heizelement 2 zeigen. Mittig ist wiederum eine Anspritz-Platte 4 vorgesehen. Entsprechend den vorherigen Ausführungsbeispielen sind die Heizelemente 2 außen und innen mit einer elektrisch leitenden Beschichtung versehen, wobei die äußere Beschichtung mit dem Minus-Pol und die innere Beschichtung mit dem Plus-Pol verbunden ist.

Gemäß einer ersten Variante des fünften Ausführungsbeispiels, die in den Figuren 11a bis 11d dargestellt ist, weisen die Heizelemente 2, im Wesentlichen entsprechend dem vierten Ausführungsbeispiel, vergrößerte wärmeübertragende Oberflächen auf, die durch an den einzelnen Heizelementen 2 im Rahmen der Herstellung derselben durch mitgespritzte, flache Scheiben 6 mit etwa rechteckförmiger Gestalt, vergrößert ist. Die einzelnen Scheiben 6 sind jeweils beabstandet voneinander angeordnet. Die elektrisch leitende äußere Beschichtung 3a ist wiederum durchgehend auch auf den Flächen und an den Außenseiten der Scheiben 6 vorgesehen.

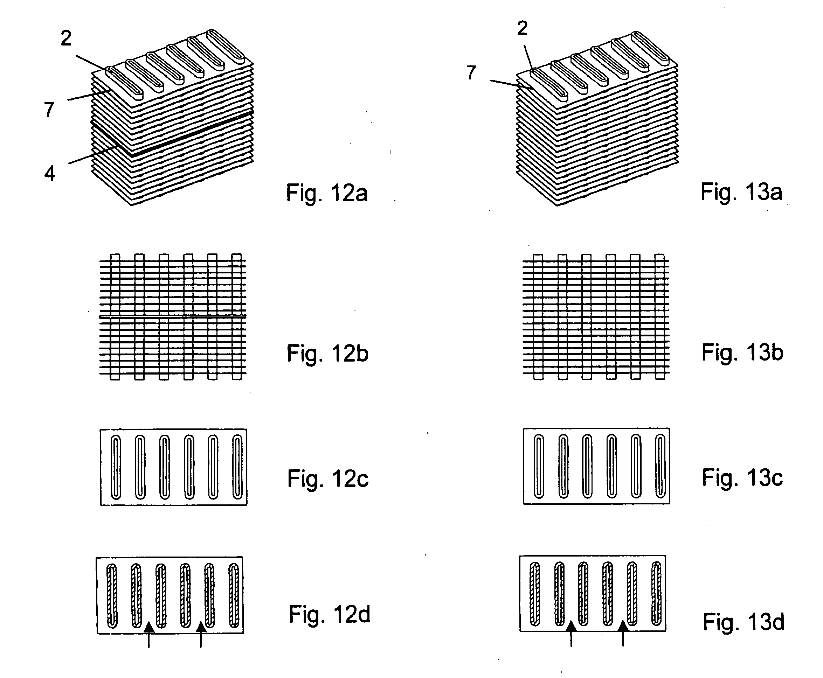

Bei einer zweiten Variante des fünften Ausführungsbeispiels, die in den Figuren 12a bis 12d dargestellt ist, sind zur Vergrößerung der wärmeübertragenden Oberfläche an Stelle der Scheiben 6 durchgehende Platten 7 mit der Gestalt der Heizelemente 2 entsprechenden Öffnungen vorgesehen, die auf die vorliegend im Verbund (Anspritz-Platte 5) hergestellten Heizelemente 2 geschoben sind.

Gemäß einer dritten Variante des fünften Ausführungsbeispiels, die in den Figuren 13a bis 13d dargestellt ist, entfällt die Anspritz-Platte 5, da die einzelnen Heizelemente 2 separat hergestellt werden und durch die Platten 7 positioniert und miteinander verbunden werden.

Gemäß einer vierten Variante des fünften Ausführungsbeispiels sind an Stelle von mitgespritzten etwa rechteckförmigen Scheiben 6 (vgl. erste Variante des fünften Ausführungsbeispiels) entsprechend ausgebildete Aluminium-Scheiben mit Öffnungen für die Heizelemente 2 auf die einzelnen Heizelemente geschoben, nachdem diese elektrisch leitend beschichtet wurden.

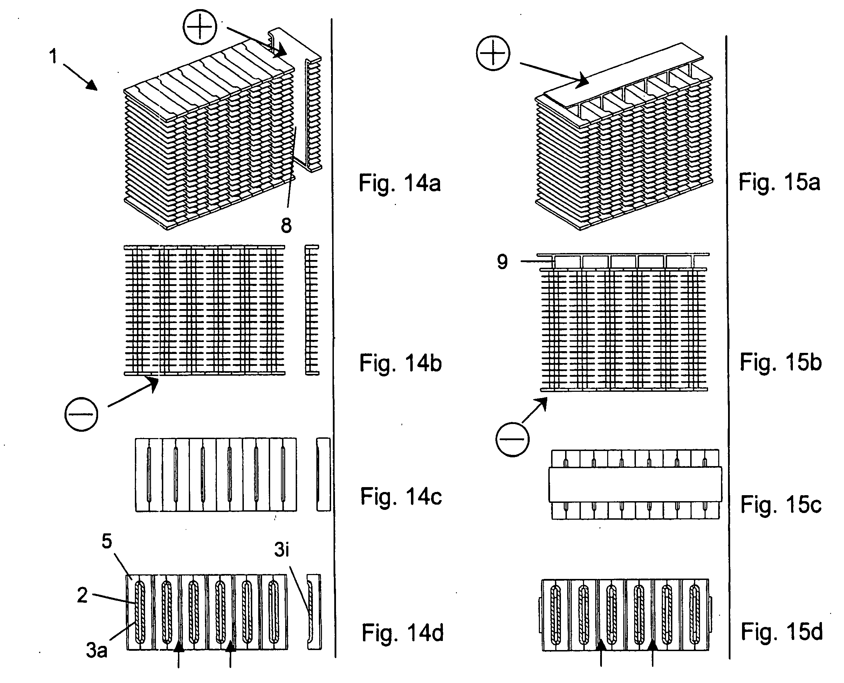

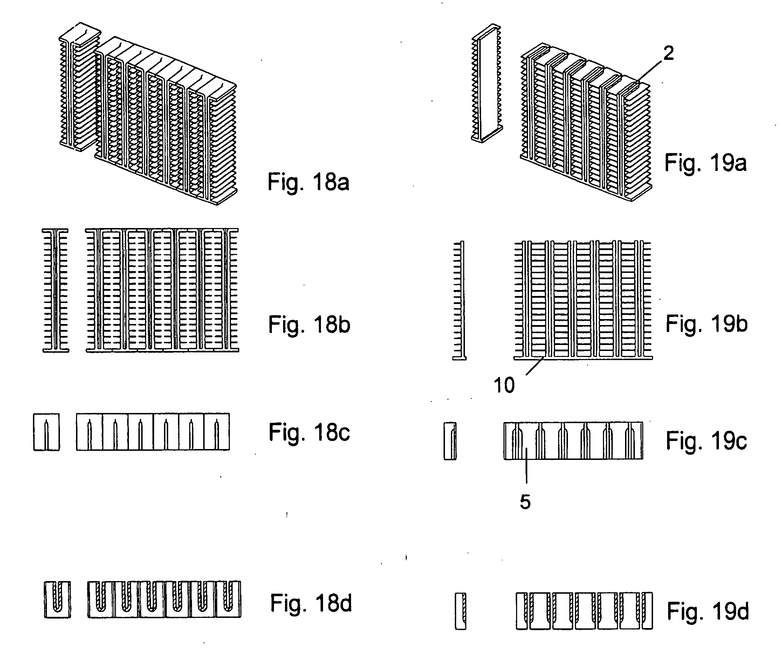

Die Figuren 14a bis 14d und 18a bis 18d zeigen das sechste Ausführungsbeispiel, welches in zusammengebauter Form etwa der ersten Variante des fünften Ausführungsbeispiels entspricht. Hierbei sind die einzelnen Heizelemente 2 nicht durch durchgehende Hohlprofile gebildet, sondern durch zusammengesetzte Halbschalen 8, an welchen oberflächenvergrößernde Strukturierungen 5 ausgebildet sind. Die Halbschalen 8 sind auf einer Seite geschlossen (vgl. Fig. 14a), wobei die Unterseite, die wie die gesamte seitliche Außenfläche mit der äußeren Beschichtung 3a versehen ist, außenseitig mit dem Minus-Pol verbunden ist. Die Oberseite ist offen ausgebildet, wobei die innere Beschichtung 3i bis zur Oberseite verläuft und mit dem Plus-Pol verbunden ist. Hierbei sind die Beschichtungen 3a und 3i auf der Oberseite voneinander beabstandet vorgesehen, so dass kein elektrischer Kurzschluss erfolgt. Ferner sind die einander kontaktierenden Stirnflächen der Halbschalen 8 nicht elektrisch leitend beschichtet.

Gemäß der in den Figuren 15a bis 15d dargestellten ersten Variante des sechsten Ausführungsbeispiels erfolgt die elektrische Kontakierung der inneren Beschichtung 3i durch nach innen eingeführte Kontaktierungsschienen 9, welche mit dem Plus-Pol verbunden sind. Ansonsten entspricht die Variante dem sechsten Ausführungsbeispiel.

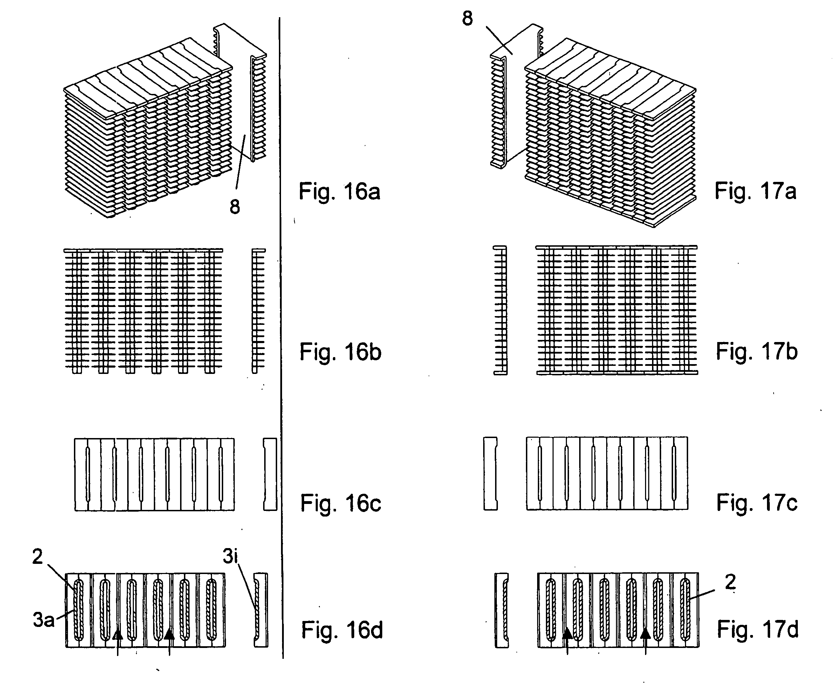

Entsprechend der in den Figuren 16a bis 16d dargestellten zweiten Variante des sechsten Ausführungsbeispiels sind die durch zwei Halbschalen 8 gebildeten Heizelemente 2 beidseitig offen ausgebildet, wobei die Heizelemente 2 unten gerade endeten. Gemäß der dritten Variante des sechsten Ausführungsbeispiels enden die Heizelemente 2 unten und oben mit einem seitlich herausgezogenen Rand, welcher in seinen seitlichen Abmessungen denen der oberflächenvergrößernden Strukturierungen 5 entspricht.

Die in den Figuren 19a bis 19d dargestellte vierte Variante des sechsten Ausführungsbeispiels entspricht im Wesentlichen dem sechsten Ausführungsbeispiel, jedoch sind keine Verbindungen der flachrohrförmigen Heizelemente 2 auf der Oberseite vorgesehen. Der Verbund wird durch eine Verbindungsplatte 10 unten zusammengehalten. Alternativ oder zusätzlich ist ein verbesserter Zusammenhalt durch als Platten ausgebildete oberflächenvergrößernde Strukturierungen 5 möglich.

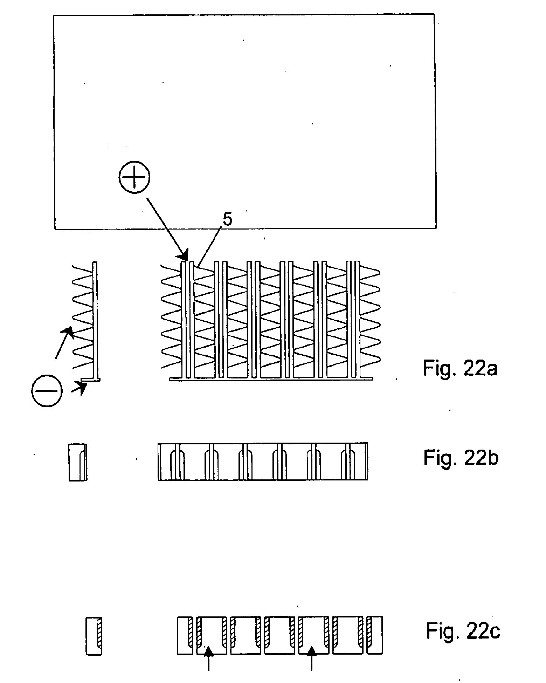

in den Figuren 22a bis 22c sind Detaildarstellungen einer nicht erfindungsgemäßen Abwandlung der vierten Variante des sechsten Ausführungsbeispiels dargestellt, wobei keine ebenen Platten zur Vergrößerung der Oberfläche vorgesehen sind, sondern als Strukturierung 5 der Oberfläche eine Wellrippe, welche auch mit Kiemen ausgebildet sein kann.

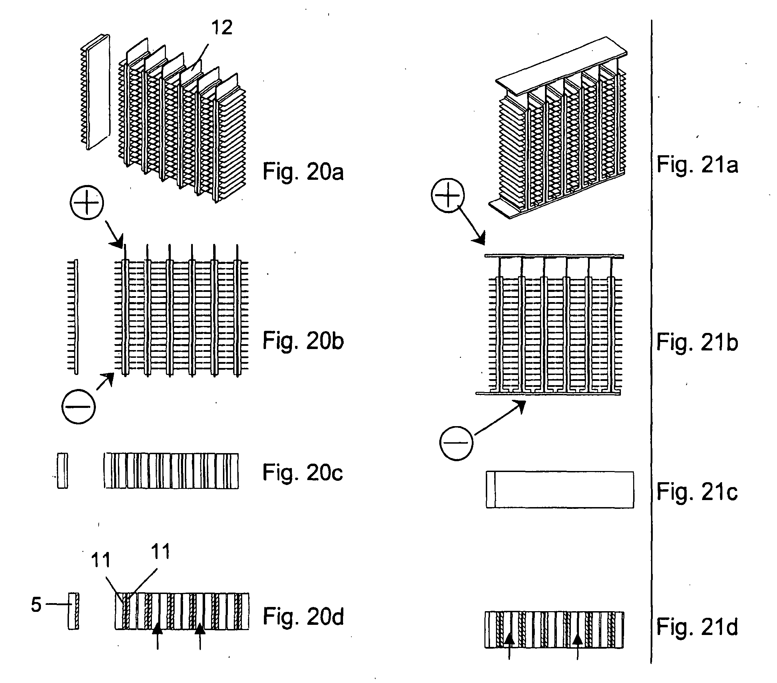

Gemäß dem in den Figuren 20a bis 20d dargestellten elektrischen Zuheizer 1 gemäß einem nicht erfindungsgemäßen siebten Beispiel sind an Stelle von Halbschalen einzelne Heizplatten 11 aus PTC-Material vorgesehen, welche auf den einander gegenüberliegenden Seiten mit einer elektrisch leitenden Beschichtung 3 versehen sind, wobei an den Plattenseiten keine elektrische Verbindung vorgesehen ist. Zwischen zwei derartige Heizplatten 11 ist ein elektrischer Kontakt 12 in Form eines Blechs eingeführt, entsprechend den Kontaktierungsschienen 9 der ersten Variante des sechsten Ausführungsbeispiels. Auf der von dem elektrischen Kontakt 12 abgewandten Seite der Heizplatten 11 ist eine Wellrippe aus einem gebogenen Aluminiumblech als oberflächenvergrößernde Strukturierung 5 vorgesehen. Hierbei kann die Wellrippe auch mit Kiemen ausgebildet sein.

Bei der in den Figuren 21a bis 21d dargestellten ersten Variante des siebten Beispiels sind die einzelnen Heizplatten 11 unten nach außen, weg vom elektrischen Kontakt gebogen. Hierbei sind die Beschichtungen derart ausgebildet, dass zwischen dem eingeführten Kontaktblech (elektrischer Kontakt 12, Plus-Pol) und dem bodenseitig in Form eines zweiten Kontaktblechs vorgesehenen Minus-Pol kein Kurzschluss entsteht.

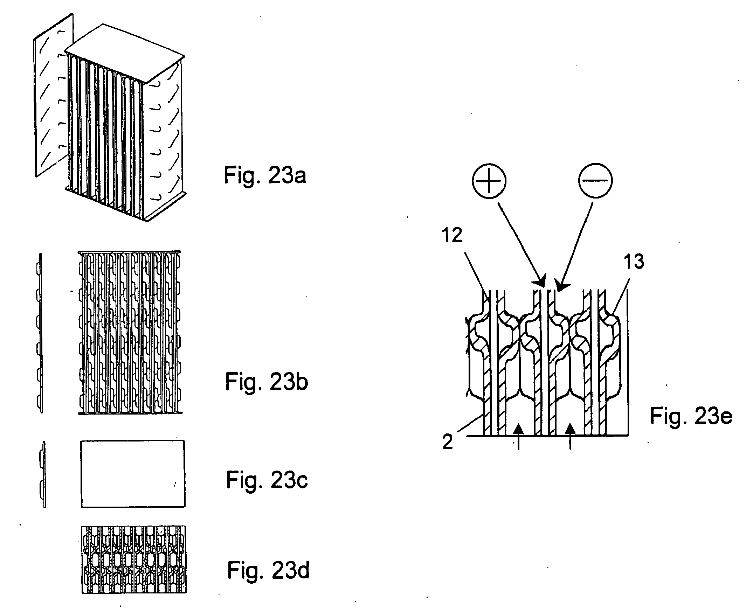

Die Figuren 23a bis 23e zeigen einen elektrischen Zuheizer gemäß einem achten Beispiel. Die einzelnen Heizelemente 2 bestehen aus einzelnen PTC-Platten von etwa konstanter Dicke, welche jedoch Strukturen 13, vorliegend längliche, noppenförmige Strukturen, aufweisen. Sie weisen wiederum beidseitig je eine elektrisch leitende Beschichtung 3 auf, die nicht miteinander elektrisch leitend verbunden sind.

Die Ausbildung der Strukturen 13 ist etwa spiegelbildlich zu einem zwischen jeweils zwei PTC-Platten angeordneten elektrischen Kontakt 12, gebildet durch eines von kammartig angeordneten dünnen Metallblechen, welches mit dem Plus-Pol verbunden ist. Die Außenseite ist mit dem Minus-Pol verbunden, so dass das PTC-Material der Heizelemente 2 über die Plattendicke hinweg relativ gleichmäßig von Strom durchflossen wird, wodurch die Heizelemente 2 gleichmäßig erwärmt werden, bis der Widerstand temperaturbedingt so groß wird, dass keine weitere Erwärmung mehr möglich ist und sich - bei konstanter Wärmeabgabe - ein stabiler Zustand einstellt. Die Strukturen 13 bestimmen den Abstand zwischen zwei Heizelementen 2 und bestimmen somit den freien Zwischenraum, durch welchen die zu erwärmende Luft strömt. Auf der anderen Seite bestimmt der elektrische Kontakt 12 den Abstand zweier PTC-Platten.

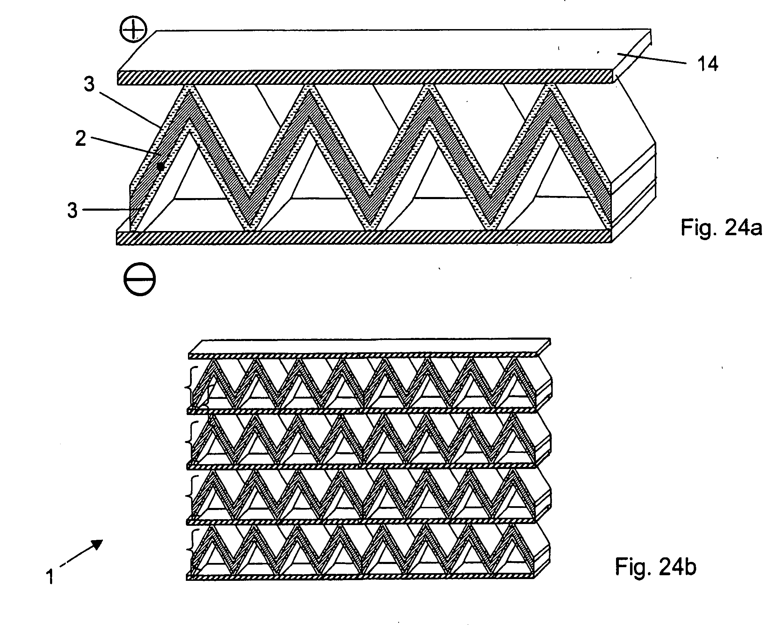

Gemäß dem in den Figuren 24a und 24b dargestellten, nicht erfindungsgemäßen neunten Beispiel sind für einen elektrischen Zuheizer 1 die Heizelemente 2 zick-zack-förmig ausgebildet und beidseitig mit einer Beschichtung 3 bestehend aus elektrisch leitenden Metallfolien versehen. Bei den Metallfolien handelt es sich vorliegend um Metallfolien aus einer Aluminium-Legierung, jedoch sind auch andere Metalle/Metall-Legierungen möglich, wie insbesondere auf Kupferbasis. Auf den Außenseiten der Knickpunkte kontaktiert die Beschichtung 3 plattenförmige aus Aluminium-Blechen bestehende Kontaktelemente 14, die jeweils zwischen zwei Heizelementen 2 und auf den Außenseiten der äußersten Heizelemente 2 angeordnet sind. Die Verbindung erfolgt vorliegend mittels Klebens, wofür gemäß dem Ausführungsbeispiel ein elektrisch leitfähiger Klebstoff verwendet wird. Die Polung der Kontaktelemente 14 erfolgt abwechselnd.

Auf Grund der Metallfolien werden die Heizelemente 2 über ihre gesamte Fläche relativ gleichmäßig von Strom durchflossen, so dass eine gieichmäßige Erwärmung erfolgt.

Neben zick-zack-förmigen Heizelementen 2 können natürlich auch andere Strukturen, wie beispielsweise wellenförmige, U-förmige, mäanderförmige Strukturen verwendet werden. Um für einen gleichmäßigen Stromfluss zu sorgen, sollte jedoch die Dicke der Strukturen, d.h. der minimale Abstand zwischen den beiden Beschichtungen, relativ konstant sein.

### Bezugszeichenliste

- 1: elektrischer Zuheizer
- 2: Heizelement
- 3: Beschichtung
- 3a: äußere Beschichtung
- 3i: innere Beschichtung
- 4: Platte
- 5: Strukturierung
- 6: Scheibe
- 7: Platte
- 8: Halbschale
- 9: Kontaktierungsschiene
- 10: Verbindungsplatte
- 11: Heizplatte
- 12: elektrischer Kontakt
- 13: Struktur
- 14: Kontaktelement

## Patentansprüche

1. Elektrischer Zuheizer, insbesondere für eine Heizungs- oder Klimaanlage eines Kraftfahrzeugs, wobei eine Mehrzahl von Heizelementen (2) vorgesehen ist, die durch PTC-Elemente gebildet sind, wobei die Heizelemente (2) mit mindestens einer elektrisch, leitenden Beschichtung (3) versehen sind, **dadurch gekennzeichnet, dass** die PTC-Elemente ein Hohlprofil aufweisen und die Heizelemente von einem Fluid umströmbar sind.

2. Elektrischer Zuheizer nach Anspruch 1, **dadurch gekennzeichnet, dass** die PTC-Elemente mit zwei räumlich durch das PTC-Element voneinander getrennten elektrisch leitenden Beschichtungen (3a, 3i) versehen sind.

3. Elektrischer Zuheizer nach Anspruch 1 oder 2, **dadurch gekennzeichnet, dass** die PTC-Elemente durch Kunststoff-Elemente mit PTC-Eigenschaften gebildet sind.

4. Elektrischer Zuheizer nach einem der vorhergehenden Ansprüche, **dadurch gekennzeichnet, dass** das Hohlprofiil aus mehreren zusammengesetzten Teilen gebildet ist.

5. Elektrischer Zuheizer nach Anspruch 4, **dadurch gekennzeichnet, dass** das Hohlprofil rundrohr oder flachrohrartig ausgebildet ist.

6. Elektrischer Zuheizer nach einem der vorhergehenden Ansprüche, **dadurch gekennzeichnet, dass** das Heizelement (2) in Längsrichtung unterteilt mehrteilig, insbesondere zweiteilig, ausgebildet ist.

7. Elektrischer Zuheizer nach Anspruch 6, **dadurch gekennzeichnet, dass** das Heizelement (2) durch zwei Platten oder Halbschalen gebildet ist.

8. Elektrischer Zuheizer nach Anspruch 7, **dadurch gekennzeichnet, dass** die das Heizelement (2) bildenden Platten strukturiert sind.

9. Elektrischer Zuheizer nach einem der vorhergehenden Ansprüche, **dadurch gekennzeichnet, dass** die elektrisch leitende Beschichtung (3) durch eine metallische Beschichtung, insbesondere durch eine Silber-, Aluminium-, Kupfer- oder Goldschicht, oder durch eine aufgebrachte Metallfolie, insbesondere aus Aluminium, einer Aluminium-Legierung, Kupfer oder einer Kupfer-Legierung, gebildet ist.

10. Elektrischer Zuheizer nach einem der vorhergehenden Ansprüche, **dadurch gekennzeichnet, dass** die äußere elektrisch leitende Beschichtung mit dem Minus-Pol und/oder die innere elektrisch leitende Beschichtung mit dem PlusPol verbunden ist.

11. Elektrischer Zuheizer nach einem der vorhergehenden Ansprüche, **dadurch gekennzeichnet, dass** das Heizelement (2) aus einem Polymer, insbesondere einem Polyolefin, mit elektrisch leitenden Füllmaterialien, insbesondere mit Kohlenstoff, insbesondere in Form von Rußpartikeln, besteht.

12. Elektrischer Zuheizer nach einem der vorhergehenden Ansprüche, **dadurch gekennzeichnet, dass** die von Luft umströmte Fläche mit einer oberflächenvergrößernden Strukturierung (5) versehen ist.

13. Elektrischer Zuheizer nach Anspruch 12, **dadurch gekennzeichnet, dass** die oberflächenvergrößernde Strukturierung (5) außenseitig mit- oder angespritzt und mit der äußeren elektrisch leitenden Beschichtung (3a) versehen ist.

14. Elektrischer Zuheizer nach Anspruch 12, **dadurch gekennzeichnet, dass** die oberflächenvergrößernde Strukturierung (5) durch gut wärmeleitende Platten (7) gebildet ist, welche auf die Heizelemente (2) geschoben sind.

15. Elektrischer Zuheizer nach Anspruch 14, **dadurch gekennzeichnet, dass** die oberflächenvergrößernden Platten (7) durch Metallbleche, insbesondere aus Aluminium, Kupfer oder Silber, gebildet sind.

16. Elektrischer Zuheizer nach Anspruch 12, **dadurch gekennzeichnet, dass** die oberflächenvergrößernde Strukturierung (5) durch Wellrippen gebildet ist, welche zwischen die Heizelemente (2) geschoben sind.

17. Elektrischer Zuheizer nach einem der vorhergehenden Ansprüche, **dadurch gekennzeichnet, dass** die Heizelemente (2) eine Struktur mit konstantem minimalen Abstand der beiden Beschichtungen (3) aufweisen.

18. Elektrischer Zuheizer nach Anspruch 17, **dadurch gekennzeichnet, dass** die Heizelemente (2) zick-zack-förmig und/oder wellenförmig und/oder mäanderförmig ausgebildet sind.

## Claims

1. An additional electric heater, in particular for a heating or air-conditioning system of a motor vehicle, a plurality of heating elements (2) being provided which are formed by PTC elements, the heating elements (2) being provided with at least one electrically conductive coating (3), **characterized in that** the PTC elements have a hollow profile and a fluid can flow around the heating elements.

2. The additional electric heater as claimed in claim 1, **characterized in that** the PTC elements are provided with two electrically conductive coatings (3a, 3i) which are spatially separated from one another by the PTC element.

3. The additional electric heater as claimed in claim 1 or 2, **characterized in that** the PTC elements are formed by plastic elements with PTC properties.

4. An additional electric heater as claimed in one of the preceding claims, **characterized in that** the hollow profile is composed of a plurality of assembled parts.

5. The additional electric heater as claimed in claim 4, **characterized in that** the hollow profile is embodied as a round tube or in the manner of a flat tube.

6. An additional electric heater as claimed in one of the preceding claims, **characterized in that** the heating element (2) is embodied divided into a plurality of parts, in particular two parts, in the longitudinal direction.

7. The additional electric heater as claimed in claim 6, **characterized in that** the heating element (2) is formed by two panels or half shells.

8. The additional electric heater as claimed in claim 7, **characterized in that** the panels which form the heating element (2) are structured.

9. An additional electric heater as claimed in one of the preceding claims, **characterized in that** the electrically conductive coating (3) is formed by a metallic coating, in particular by a silver, aluminum, copper or gold layer, or by an applied metal foil, in particular made of aluminum, an aluminum alloy, copper or a copper alloy.

10. An additional electric heater as claimed in one of the preceding claims, **characterized in that** the outer electrically conductive coating is connected to the negative pole and/or the inner electrically conductive coating is connected to the positive pole.

11. An additional electric heater as claimed in one of the preceding claims, **characterized in that** the heating element (2) is composed of a polymer, in particular a polyolefin, with electrically conductive filling materials, in particular with carbon, in particular in the form of soot particles.

12. An additional electric heater as claimed in one of the preceding claims, **characterized in that** the surface around which air flows is provided with a surface-enlarging structured configuration (5).

13. The additional electric heater as claimed in claim 12, **characterized in that** the surface-enlarging structured configuration (5) is integrally molded with or molded onto the outside and is provided with the outer electrically conductive coating (3a).

14. The additional electric heater as claimed in claim 12, **characterized in that** the surface-enlarging structured configuration (5) is formed by panels (7) which are good conductors of heat and which are fitted onto the heating elements (2).

15. The additional electric heater as claimed in claim 14, **characterized in that** the surface-enlarging panels (7) are formed by sheet metal panels, in particular made of aluminum, copper or silver.

16. The additional electric heater as claimed in claim 12, **characterized in that** the surface-enlarging structured configuration (5) is formed by corrugated ribs which are fitted between the heating elements (2).

17. An additional electric heater as claimed in one of the preceding claims, **characterized in that** the heating elements (2) have a structure with a constant minimum distance between the two coatings (3).

18. The additional electric heater as claimed in claim 17, **characterized in that** the heating elements (2) are formed in a zig-zag shape and/or corrugated shape and/or meandering shape.

## Revendications

1. Dispositif de chauffage électrique auxiliaire, en particulier pour un système de chauffage ou de climatisation d'un véhicule automobile, où il est prévu une pluralité d'éléments chauffants (2) qui sont formés par des éléments à coefficient de température positif (CTP), où les éléments chauffants (2) sont dotés d'au moins un revêtement (3) électroconducteur, **caractérisé en ce que** les éléments à coefficient de température positif (CTP) présentent un profilé creux et les éléments chauffants sont baignés par un fluide.

2. Dispositif de chauffage électrique auxiliaire selon la revendication 1, **caractérisé en ce que** les éléments à coefficient de température positif (CTP) sont dotés de deux revêtements (3a, 3i) électroconducteurs séparés physiquement l'un de l'autre par l'élément à coefficient de température positif (CTP).

3. Dispositif de chauffage électrique auxiliaire selon la revendication 1 ou 2, **caractérisé en ce que** les éléments à coefficient de température positif (CTP) sont formés par des éléments en matière plastique ayant des propriétés de coefficient de température positif (CTP).

4. Dispositif de chauffage électrique auxiliaire selon l'une quelconque des revendications précédentes, **caractérisé en ce que** le profilé creux est formé par plusieurs parties assemblées.

5. Dispositif de chauffage électrique auxiliaire selon la revendication 4, **caractérisé en ce que** le profilé creux est configuré comme un tube rond ou en forme de tube plat.

6. Dispositif de chauffage électrique auxiliaire selon l'une quelconque des revendications précédentes, **caractérisé en ce que** l'élément chauffant (2) est divisé, dans le sens de la longueur, en plusieurs parties, en particulier en deux parties.

7. Dispositif de chauffage électrique auxiliaire selon la revendication 6, **caractérisé en ce que** l'élément chauffant (2) est formé par deux plaques ou demi-coques.

8. Dispositif de chauffage électrique auxiliaire selon la revendication 7, **caractérisé en ce que** les plaques formant l'élément chauffant (2) sont structurées.

9. Dispositif de chauffage électrique auxiliaire selon l'une quelconque des revendications précédentes, **caractérisé en ce que** le revêtement (3) électroconducteur est formé par un revêtement métallique, en particulier par une couche d'argent, d'aluminium, de cuivre ou d'or, ou bien par une feuille métallique appliquée, en particulier en aluminium, en alliage d'aluminium, en cuivre ou en alliage de cuivre.

10. Dispositif de chauffage électrique auxiliaire selon l'une quelconque des revendications précédentes, **caractérisé en ce que** le revêtement électroconducteur extérieur est raccordé au pôle moins et / ou le revêtement électroconducteur intérieur au pôle plus.

11. Dispositif de chauffage électrique auxiliaire selon l'une quelconque des revendications précédentes, **caractérisé en ce que** l'élément chauffant (2) se compose d'un polymère, en particulier d'une polyoléfine, comprenant des matières de remplissage électroconductrices, en particulier comportant du carbone, en particulier sous forme de particules de suie.

12. Dispositif de chauffage électrique auxiliaire selon l'une quelconque des revendications précédentes, **caractérisé en ce que** la surface baignée par de l'air est dotée d'une structuration (5) augmentant la surface.

13. Dispositif de chauffage électrique auxiliaire selon la revendication 12, **caractérisé en ce que** la structuration (5) augmentant la surface est, extérieurement, intégrée ou appliquée par moulage par injection et dotée du revêtement (3a) électroconducteur extérieur.

14. Dispositif de chauffage électrique auxiliaire selon la revendication 12, **caractérisé en ce que** la structuration (5) augmentant la surface est formée par des plaques (7) bonnes conductrices de la chaleur qui sont insérées sur les éléments chauffants (2).

15. Dispositif de chauffage électrique auxiliaire selon la revendication 14, **caractérisé en ce que** les plaques (7) augmentant la surface sont formées par des tôles métalliques, en particulier en aluminium, en cuivre ou en argent.

16. Dispositif de chauffage électrique auxiliaire selon la revendication 12, **caractérisé en ce que** la structuration (5) augmentant la surface est formée par des ailettes ondulées qui sont insérées entre les éléments chauffants (2).

17. Dispositif de chauffage électrique auxiliaire selon l'une quelconque des revendications précédentes, **caractérisé en ce que** les éléments chauffants (2) présentent une structure dont l'intervalle minimum entre les deux revêtements (3) est constant.

18. Dispositif de chauffage électrique auxiliaire selon la revendication 17, **caractérisé en ce que** les éléments chauffants (2) sont configurés en forme de zigzags et / ou en forme d'ondulations et / ou en forme de méandres.
